# EUROPEAN PATENT APPLICATION

(11) **EP 4 592 103 A1**
(43) Date of publication of application: **30.07.2025**
(21) Application number: 24154483.2
(22) Date of filing: 29.01.2024
(51) Int. Cl.: B60G 17/018, B60G 17/016

(54) **METHOD FOR CHANGING ROLLING RESISTANCE IN A VEHICLE**

(71) Applicant: VOLVO TRUCK CORPORATION, 405 08 Göteborg (SE)
(72) Inventor: WILHELMSSON, Martin, 423 39 TORSLANDA (SE); STJERNBERG, Oscar, 411 35 GÖTEBORG (SE)
(74) Representative: Ström & Gulliksson AB

(57) **Abstract**

A computer system (**700**) for performing an axle load adjustment action (**100**) of vehicle axle (**20**) of a vehicle (**10**) is provided. The computer system (**700**) comprising processing circuitry (**702**) is configured to obtain (**210**) tire data (**103**), and obtain (**230**) at least one adjustment parameter (**120**), wherein at least one adjustment parameter (**120**) is requirement data (**110**) pertaining to the weight of the vehicle (**114**), axle load requirements of the vehicle (**112**), and the legal requirements (**116**) for the road (**R**) on which the vehicle is or will be travelling, determine (**250**) an axle load adjustment action (**100**) based on at least one adjustment parameter (**120**) and based on tire data (**103**), and execute (**260**) said axle load adjustment action (**100**), wherein the axle load adjustment action (**100**) comprises an temporarily increase of the load of the at least one axle (**20**) of the vehicle (**10**).

## Description

### TECHNICAL FIELD

The disclosure relates generally to vehicles. In particular aspects, the disclosure relates to a computer-implemented method of changing the rolling resistance on at least one tire of a vehicle. The disclosure can be applied in heavy-duty vehicles, such as trucks, buses, construction equipment, among other vehicle types. The disclosure can be used in autonomous vehicles, as well as in driver controlled vehicles. Although the disclosure may be described with respect to a particular vehicle, the disclosure is not restricted to any particular vehicle.

### BACKGROUND

Heavy-duty vehicles, such as trucks and semi-trailer vehicles, are designed to carry heavy loads. The heavily laden vehicles must be able to start from standstill also in uphill conditions, accelerate on various types of road surfaces, and most importantly be able to reduce velocity, i.e., brake, in a controlled and reliable manner at all times. It is also important that the vehicle can be operated in an energy efficient manner without unnecessary component wear. A key property to achieving this functionality are a well-designed set of tires. Ideally, the tire should have a combination of high friction and low rolling resistance. A well designed tire also has a low wear rate, i.e., it is mechanically durable and lasts for a long period of time.

There is a continuing need for further improvements in how to efficiently change the rolling resistance of a tire.

### SUMMARY

According to a first aspect of the disclosure, a computer system for performing an axle load adjustment action of at least one vehicle axle of a vehicle is provided. The computer system comprising processing circuitry configured to obtain tire data, wherein said tire data comprises rolling resistance data and/or temperature data of at least one tire of the vehicle, obtain at least one adjustment parameter, wherein at least one adjustment parameter is requirement data pertaining to the weight of the vehicle, axle load requirements of the vehicle, and the legal requirements for the road on which the vehicle is or will be travelling, determine an axle load adjustment action based on at least one adjustment parameter and based on tire data; and execute said axle load adjustment action, wherein the axle load adjustment action comprises an temporarily increase of the load of the at least one axle of the vehicle. The first aspect of the disclosure may seek to eliminate the problem of cold tires. A technical benefit may include providing a solution that allows for an accelerated tire temperature, so to reduce the rolling resistance of the tires. A technical benefit may thus be energy savings.

Optionally in some examples, including in at least one preferred example, the increase of the load of the at least one vehicle axle is performed by lifting and/or lowering at least a part of an axle of the vehicle. A technical benefit may be that this increase of load causes an increase in temperature of the at least one tire and thereby changing the rolling resistance of said tire.

Optionally in some examples, including in at least one preferred example, the axle load adjustment action causes an increase in temperature of the at least one tire and thereby changing the rolling resistance of said tire. A technical benefit may be energy savings.

Optionally in some examples, including in at least one preferred example, the processing circuitry is further configured to evaluate the need of an axle load adjustment action based on the tire data, and upon determining that there is a need for an axle load adjustment action perform said determination. A technical benefit may be a quick way to determine if it is needed to increase the temperature of the tires.

Optionally in some examples, including in at least one preferred example, the evaluation is based on tire data and/or one or more adjustment parameters.

Optionally in some examples, including in at least one preferred example, the processing circuitry is further configured to initiate the evaluation, wherein the initiation is automatically performed based on data, wherein said data pertains to information relating to the initiation of the vehicle. A technical benefit may that the evaluation is performed when then tires are cold due to the vehicle being stationary.

Optionally in some examples, including in at least one preferred example, the determination of the axle load adjustment action is based on at least two adjustment parameters, and wherein one adjustment parameter is a predicted estimative data of energy consumption of an adjusted axle load, predicted estimative data of energy consumption of a maintained axle load and/or the difference between the predicted data of the energy consumption of a maintained axle load and the predicted data of the energy consumption of an adjusted axle load.

Optionally in some examples, including in at least one preferred example, the determination of the axle load adjustment action is based on at least two adjustment parameters, wherein one adjustment parameter is predictive data of the upcoming route of the vehicle.

Optionally in some examples, including in at least one preferred example, the determination of the axle load adjustment action is based on at least two adjustment parameters, wherein one adjustment parameter is estimated tire wear of at least one tire of the vehicle, the tire pressure and/or an optimum temperature of the at least one tire.

Optionally in some examples, including in at least one preferred example, the at least one vehicle axle is a driving axle or a bogie axle.

Optionally in some examples, including in at least one preferred example, the at least one vehicle axle is in a push configuration or in a pull configuration.

According to a second aspect of the disclosure, a vehicle comprising the computer system of the first aspect, and at least one axle is provided.

According to a third aspect of the disclosure, a computer-implemented method for performing an axle load adjustment action of at least one vehicle axle of a vehicle is provided. The method comprising obtaining, by processing circuitry of a computer system, tire data, wherein said tire data comprises rolling resistance data and/or temperature data of at least one tire of the vehicle, obtaining, by the processing circuitry, at least one adjustment parameter, wherein at least one adjustment parameter is requirement data pertaining to axle load requirements of the vehicle, the weight of the vehicle and the legal requirements for the road on which the vehicle is or will be travelling, determining, by the processing circuitry, an axle load adjustment action based on at least one adjustment parameter and based on tire data; and executing, by the processing circuitry, said axle load adjustment action, wherein the axle load adjustment action comprises an temporarily increase of the load of the at least one axle of the vehicle.

Optionally in some examples, including in at least one preferred example, the determination of the axle load adjustment action is based on at least two adjustment parameters, wherein the method further comprises obtaining at least one additional adjustment parameter, wherein the additional adjustment parameter is predicted estimative data of energy consumption of an adjusted axle load, predicted estimative data of energy consumption of a maintained axle load, the difference between the predicted data of the energy consumption of a maintained axle load and the predicted data of the energy consumption of an adjusted axle load, predictive data of the upcoming route of the vehicle, tire pressure, estimated tire wear of at least one tire of the vehicle and/or an optimum temperature of the at least one tire.

According to a fourth aspect of the disclosure, a computer program product comprising program code for performing, when executed by the processing circuitry, the method of any of the third aspect is provided.

According to a fifth aspect of the disclosure, a non-transitory computer-readable storage medium comprising instructions, which when executed by the processing circuitry, cause the processing circuitry to perform the method of the third aspect is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary heavy-duty vehicle according to an example.
FIGS. 2A-B are exemplary wheels of a vehicle according to one example.
FIGS. 3A-D are exemplary heavy-duty vehicles according to different examples.
FIGS. 4A-B are an exemplary system diagram of a computer system according to different examples.
FIGS. 5A-B are schematic illustrations of different parameters over time according to different examples.
FIGS. 6A-B are exemplary heavy-duty vehicles according to different examples.
**FIG. 7** is a flow chart of an exemplary method to according to an example.
**FIG. 8** is another view of **FIG. 7****,** according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

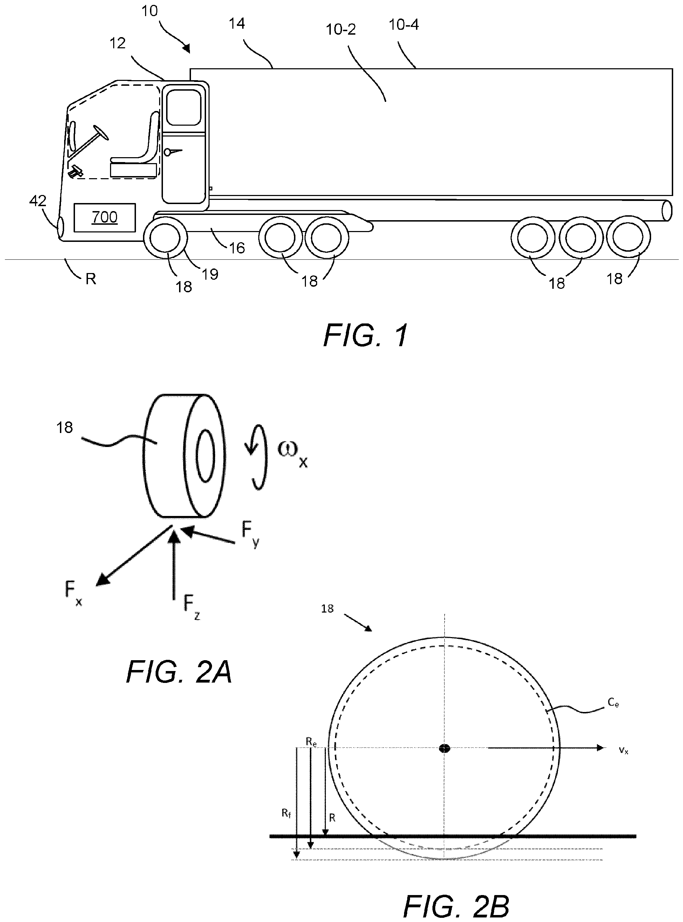

**FIG. 1** is a schematic illustration of a heavy-duty vehicle **10.** This particular example comprises a tractor unit **12** which is arranged to tow a trailer unit **14.** The vehicle combination may of course also comprise additional vehicle units, such as one or more dolly units and more than one trailer unit. Although the vehicle is illustrated as a tractor unit, it should be realized that other types of vehicles may be equally considered for the purpose of the herein described method such as busses, construction equipment, trucks, etc.

The vehicle **10** is supported by wheels **19,** where each wheel comprises a tire **18.** The tractor unit **12** has front wheels which are normally steered, and rear wheels of which at least one pair are driven wheels. Generally, the rear wheels of the tractor **12** may be mounted on tag or pusher axles. A tag axle is where the rear-most drive axle is non-powered, also referred to as a free-rolling or dead axle. A pusher axle is where the forward-most drive axle is not powered. The trailer unit **14** is supported on trailer wheels. Trailers with driven wheels, and even a steered axle, are also possible.

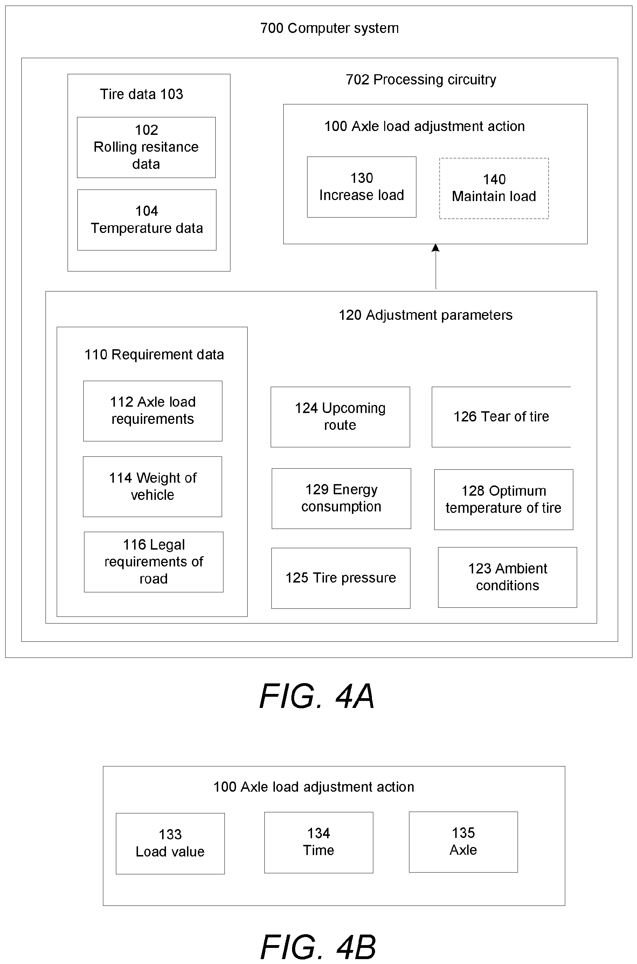

The vehicle **10** further comprises a computer system **700** comprising processing circuitry **702.** The computer system **700** will be described more in detail with reference to **FIG. 4A****.** The computer system **700** may comprises a vehicle control unit (VCU) arranged to control various functions of the vehicle **10.** For instance, the VCU may be arranged to perform a vehicle motion management (VMM) function comprising control of wheel slip, vehicle unit stability, and so on. The trailer unit optionally also comprises a VCU, which then controls one or more functions on the trailer. The VCU or VCUs may be communicatively coupled, e.g., via wireless link, to a remote server. This remote server may be arranged to perform various configurations of the ECU, and to provide various forms of data to the ECU, such as for example providing data regarding the make and type of tires mounted on the vehicle.

One of the rear axles and/or one of the axles on the trailer **14** may be a liftable axle. A lift axle, also known as a retractable axle, is an axle which can be raised so that its tires are not touching the road surface. This improves fuel economy and reduces maintenance and tire wear. It may also reduce or increase dynamic stability features of the vehicle and it can increase or decrease road wear depending on vehicle load, which axles that are lifted and in which driving situation the axle is lifted. One or more of the wheels may also be mounted with an active suspension which may be controlled by the VCU e.g., in order to adjust a normal force of one or more tires.

**FIG. 2A** illustrates forces acting on a tire **18.** The tires **18** on the wheels of a vehicle, such as the vehicle **10,** play a major role in determining the behavior and capabilities of the vehicle **10.** A well-designed set of tires will provide both good traction and fuel economy, while a poorly designed set of tires, or overly worn tires, are likely to reduce both traction and fuel economy and may even result in an unstable vehicle combination, which of course is undesired.

With reference to **FIG. 2A****,** a tire **18** is subject to a longitudinal force Fₓ, a lateral force F_{y}, and a normal force F_{z}. The normal force F_{z} is key to determining some important vehicle properties. For instance, the normal force to a large extent determines the achievable longitudinal tire force Fₓ by the wheel since, normally, *Fₓ* ≤ *µ F_{z}*, where *µ* is a friction coefficient associated with a road friction condition. The maximum available lateral force for a given lateral slip can be described by the so-called Magic Formula as described in "Tire and vehicle dynamics", Elsevier Ltd. 2012, ISBN 978-0-08-097016-5, by Hans Pacejka, where wheel slip and tire force is also discussed in more detail.

The illustration in **FIG. 2B** shows a tire **18** that moves at a speed *vₓ* under applied load. The radius *Rₑ* is the radius of the tire in an un-loaded and stationary state, the radius R_{f} is the free undeformed radius that may vary along the tire circumference due to tire nonuniformity, and *Rₑ* is the effective rolling radius. The loaded tire radius *Rₑ* is defined as the vertical distance between the wheel center and the horizontal surface. A free rolling tire rotates around a point near the contact patch. For a rigid wheel on a flat horizontal surface, this point coincides with the single contact point between tire and road. Thus, the forward speed *vₓ* v equals the angular speed ωₓ times (loaded=unloaded) radius. The loaded radius *Rₑ* of the tire in an un-loaded and stationary state of the vehicle **10** is of course equal to the free undeformed radius Rf when no wheel load is applied. The denotation Cₑ defines an effective rolling circle of the tire and is used to estimate the free undeformed radius R_{f}, Put differently, the loaded tire radius *Rₑ* is the distance from the center of the wheel down to the flat part which has contact with ground, as shown in **FIG. 2B****.** The effective wheel radius may be defined as the rolled distance normalized with 2*pi, assuming that no slip is present.

A tire rotating at higher speeds tends to develop a larger diameter, i.e., a larger rolling radius, due to centrifugal forces that force the tread rubber away from the axis of rotation. This effect is often referred to as centrifugal growth. As the tire diameter grows, the tire width decreases. Excessive centrifugal growth may significantly impact the behavior of a tire.

Rolling resistance is the resistance to rolling caused by deformation of the tire in contact with the road surface. As the tire rolls, tread enters the contact area and is deformed flat to conform to the roadway. The energy required to make the deformation depends on the inflation pressure, rotating speed, and numerous physical properties of the tire structure, such as spring force and stiffness. Tire makers often seek lower rolling resistance tire constructions to improve fuel economy in trucks, where rolling resistance accounts for a high proportion of fuel consumption.

Tire rolling resistance force, measured in Newtons, can be defined as *F* = *m* * *g* * *C_{R}* * cos(*α*), where *C_{R}* is the rolling resistance coefficient (dimensionless), *α* is the road inclination (in radians), m is the mass of the vehicle (in kg), and g is the gravitational acceleration (in m/s²). The gravitational acceleration is typically around 9.82 m/s². The rolling resistance coefficient *C_{R}* is highly tire temperature dependent. If tire temperature increases from a cold state to a warmer state, the rolling resistance coefficient will decrease. This will reduce the rolling resistance force and required energy to drive the vehicle forward.

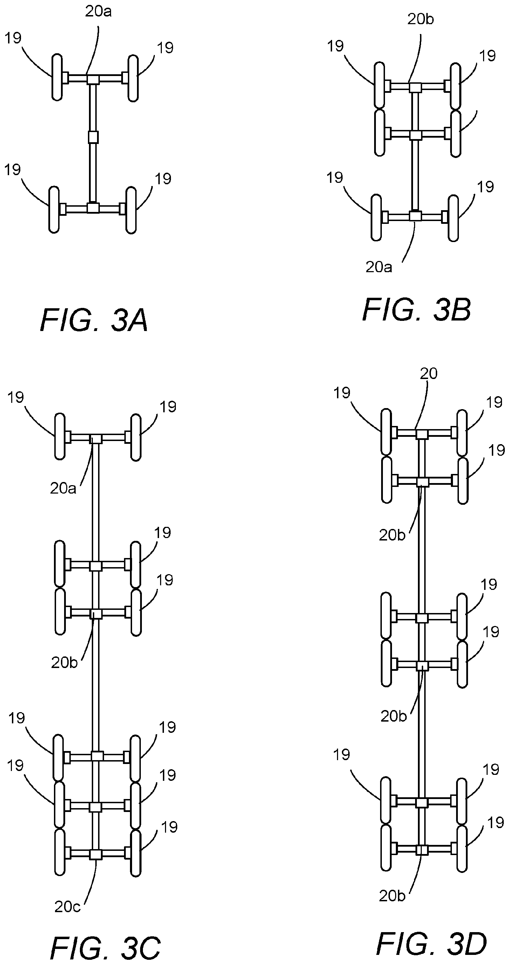

FIGS. 3A-D are schematic drawings of top views of vehicles **10** illustrating different vehicles axles **20.** The vehicle axles **20** support the weight of the vehicle and allows the wheels to rotate.

In this specific example of **FIG. 3A****,** the axles **20** are illustrated as single axles **20a.** A single axle consists of a single shaft with two wheels attached at each end. However, as should be understood by a person skilled in the art, the axle **20** may also be a tandem axle, consisting of two axles positioned close together, or a triple axel consisting of three axles positioned close together. The axle of a vehicle typically comprises axle shaft, which is the rotating shaft that connects the wheels on each side of the axle. It transmits torque from the differential to the wheels, enabling them to rotate. Wheel hubs are attached to the ends of the axle shaft and support the wheels. The wheel hubs are often arranged with bearings that reduce friction between the rotating surfaces. The axles are also arranged with suspension components, such as for example springs and shock absorbers, that connect the axles to the vehicle frame.

**FIG. 3B** illustrates a vehicle **10** with a bogie axle **20b**. A bogie axle is a special type of tandem axle that allows for greater flexibility and maneuverability. A bogie axle typically consist of two axles connected by a pivot point, enabling the axles to move independently of each other. A bogie axle may be defined as when to axles in a vehicle have a mutual distance of less than 2 meters.

**FIG. 3C** illustrates a vehicle **10** having a triple axle **20c.** In this specific example the vehicle is arranged with a single axle **20a,** a bogie axle **20c** and a triple axle **20c.** A triple axle may be defined as when three axles in a vehicle have less distance than 5.0 meters between the first and the third axle.

**FIG. 3D** illustrates a vehicle **10** having three sets of bogie axles **20b.** As should be understood by a person skilled in the art, other configuration of axles exists and are applicable to the present inventive concept.

The inventors of the present invention have realized that it in some situations would be beneficial to change the rolling resistance of the tires in a simple but yet effective manner. The inventors have realized that one way to achieve this is by increasing the temperature of the tires and that the temperature increase of the tires can be achieved by temporarily increase the load of at least one axle. To achieve this, a computer system **700** is provided. The different aspects of the method will now be described in more in detail with reference to **FIGS. 4-8****.**

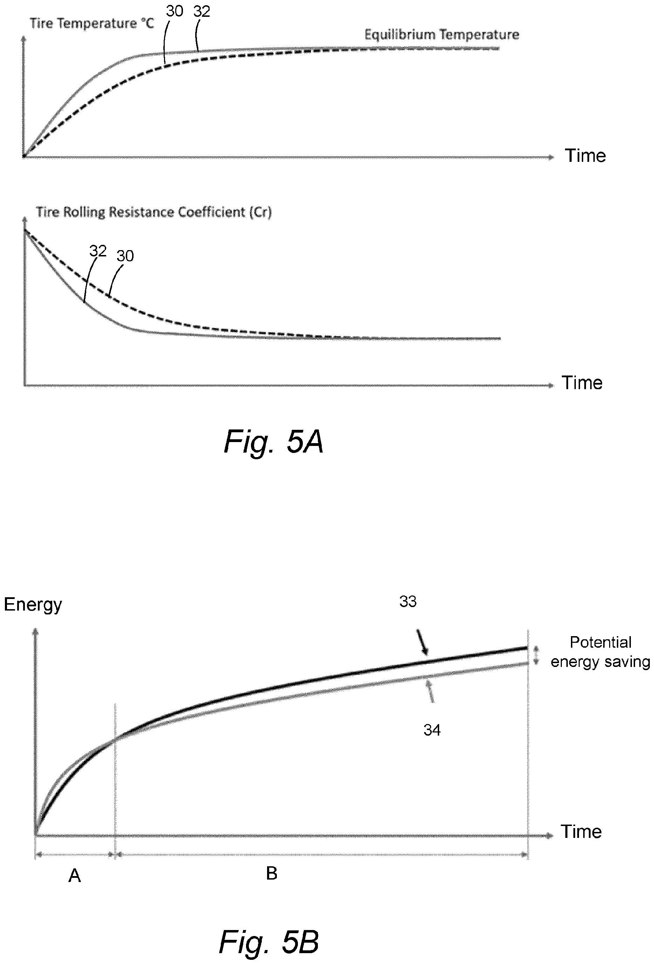

FIGS. 4A -B are schematic drawings of a computer system **700** having a processing circuitry **702.** The computer system **700** is configured to perform an axle load adjustment action **100** of at least one axle **20** of the vehicle **10.** The axle load adjustment action **100** may comprise a temporarily increase of the load of the at least one axle **20** of the vehicle **10.** The axle load adjustment action **100** causes an increase in temperature of the at least one tire **18** and thereby changing the rolling resistance of said tire **18.** The increase of the load of the at least one vehicle axle **20** may be performed by lifting and/or lowering at least a part of an axle **20** of the vehicle **10,** as will be discussed more in detail with reference to FIGS. 5A-B.

The processing circuitry **702** is configured to obtain tire data **103.** The tire data relates to parameters of at least one tire **18** of the vehicle **10.** The tire data may pertain to rolling resistance data **102** and/or temperature data **104** of at least one tire **18** of the vehicle **10.**

The temperature data **104** of the at least one tire **18** may relate to the outer temperature of the tire, the inner temperature of the tire, or an average temperature of the tire. The temperature data may relate to an actual temperature. The actual temperature may be received by a temperature sensor. The temperature sensor may be arranged in conjunction to the tire. The temperature sensor may also be arranged in conjunction with the wheel or wheel house of the vehicle **10.** The temperature data **104** may additionally or alternatively be a predicted or estimated temperature. The temperature may be predicted by different mathematical estimations as known in the art. The temperature data may further be a temperature received by a combination of sensor data and estimated data.

The rolling resistance data **102** relates to the rolling resistance of the tire. The rolling resistance data may be a tire rolling resistance force or a rolling resistance coefficient. The rolling resistance data may be an actual value or an estimated or predicted value.

The processing circuitry **702** is further configured to obtain at least one adjustment parameter **120.** The adjustment parameters **120** may relate to requirement data **110,** upcoming route of the vehicle **10,** tear of the tire **126,** pressure of the tire **125,** ambient conditions **123,** energy consumption **129,** and/or optimum temperature of the tire **128.**

The requirement data **110** may relate to requirements of the vehicle and/or the road on which the vehicle is traveling or will be travelling. The requirement data **110** may pertain to the weight of the vehicle **114,** axle load requirements **112** of the vehicle and the legal requirements **116** for the road **R** on which the vehicle is or will be travelling.

The weight of the vehicle **114** may be the actual weight of the vehicle **10.** The weight of the vehicle may be stored in an internal memory. The actual weight of the vehicle may be determined upon loading the vehicle. The weight of the vehicle **114** may also be an estimated or predicted weight. The estimation or prediction may be based on the permitted load of the vehicle **10.** The estimation or prediction may additionally or alternatively be based on the expected load of the vehicle. This could be based on information received from the loader, based on the destination and/or the type of cargo. The weight of the vehicle may be a measured value (such as measured in tons or kilos) and/or information relating to the load of the vehicle (fully loaded, half-loaded or no goods). The information may be received by different sensors arranged on the vehicle, such as weight sensors.

The axle load requirements **122** of the vehicle may relate to axle weight limits, axle distance limits, and/or suspension requirements of the vehicle **10.** The axle load requirements **122** may for example relate to the maximum weight that is allowed to be carried on each axle. The maximum weight allowed on each axle is vehicle specific. As an example, a tandem axle on a commercial truck may be limited to 15 000 kg. The processing circuitry **702** may be configured to obtain this information locally in processing circuitry **702** of the vehicle **10.**

The axle weight limits of the road may relate to the maximum weight that can be carried on each axle. The axle weight limit may be a permissible bogie pressure. A bogie axle may be defined as when to axles in a vehicle have a mutual distance of less than 2 meters. Bogie pressure may be defined as the total static weight that the wheels of a bogie transfer to the road surface. The axle weight limit may be a permissible triple axle pressure. A triple axle may be defined as when three axles in a vehicle have less distance than 5.0 meters between the first and the third axle. A triple axle pressure may be defined as the total static weight that the wheels in a triple axle transfer to the road surface.

In one non-limiting example, the legal allowed axle weight limit on a "normal" road (classified as a normal load-bearing class) on a non-driving axle is 10 000 kg and on a driving axle 11 500 kg. In yet one non-limiting example, the allowed bogie pressure on a "normal" road for a bogie axle being 180 cm or bigger is 20 000 kg, for an bogie axle being between 100 - 130 cm is 16 000 kg and for an bogie axle between 130 cm - 180 cm is 18 000 kg. In yet one non-limiting example, the allowed triple axle pressure on a "normal" road for an triple axle being 4,7 meters or larger is 26 000 kg, and for an triple axle being less than 2,6 meters is 21 000 kg.

The processing circuitry **702** may be configured to obtain the legal requirements for the road **R** from navigational data. The data may also be stored locally in the processing circuitry of the vehicle **10.** The legal requirements of the road **R** may relate to axle weight limits, axle distance limits, and/or suspension requirements of the vehicle on said road. The legal requirements of the road **R** may also relate to the type of road surface or road type and/or the slope or inclination of the road. The legal requirements may for example be road specific, regional specific or country specific. The legal requirements of the road are typically designed to protect the road infrastructure from excessive wear and tear, as well as ensuring safe operation of vehicles.

The processing circuitry **702** may process the requirement data **110** in order to obtain a threshold. In one example, the threshold is a single value. The single value may be a combination of the threshold for axle load requirements **112,** the threshold for the weight of the vehicle **114** and the threshold for legal requirements of the road **116.** The combined value may be weighted.

In another example, the requirement data **110** comprises several thresholds. In one example, the requirement data **110** comprises one threshold for axle load requirements **112,** one threshold for the weight of the vehicle **114** and one threshold for legal requirements of the road **116.**

One adjustment parameter **120** is related to energy consumption **129.** The energy consumption **129** may relate to the whole vehicle, or parts of the vehicle. The energy consumption **129** may relate to fuel consumption of the vehicle. In one example, the energy consumption **129** is related to the axle load. The energy consumption **129** may be related to an adjusted axle load, a maintained axle load and/or the difference between an adjusted and maintained axle load. The energy consumption **129** may be the actual value at a given time. For example, the energy consumption may relate to a certain axle load at a precious time frame. In one example, the energy consumption **129** is predictive data. The predictive data may comprises one or several values. The predictive data may be related to an adjusted axle load, a maintained axle load and/or the difference between an adjusted and maintained axle load. In one example the predicted estimative data of energy consumption **129** is of an adjusted axle load, predicted estimative data of energy consumption **129** of a maintained axle load and/or the difference between the predicted estimative data of the energy consumption of a maintained axle load and the predicted estimative data of the energy consumption of an adjusted axle load.

One adjustment parameter **120** is related to the upcoming route **124.** The upcoming route may relate to predictive data of the upcoming route **124** of the vehicle **10.** The upcoming route **124** may include data of the upcoming road, such as road inclination, legal requirements of the road, road type, road surface, road speed limits or other road related information. The processing circuitry **702** may obtain data relating to the upcoming route from navigational data, from external sensors and/or data stored in the local memory of the vehicle **10.**

The upcoming route **124** may comprise information relating to road information. Road information pertains to the road on which the vehicle is currently travelling on, roads that the vehicle **10** has been travelling on and/or road that the vehicle will travel on in the planned route. The road information may for example relate to road inclination, temperature of the road, shape of the road, and/or surface of the road. The road inclination may comprise information of upcoming changes in inclination of the road, for example if the inclination will be negative or positive, the maximum amount of inclination, a mean value of the inclination and/or the length of the inclination. The road inclination is preferably received from a navigation service. The temperature of the road preferably relates to temperature at a given location that the vehicle **10** has travelled. The temperature is preferably received from a weather forecast. The surface of the road may for example relate to the road surface roughness and/or road surface classification (gravel road, dirt road, asphalt road, etc.) of the road of the travelled route. The road surface may be uneven for many reasons, for example due to eroding roads, potholes, gravel road, dirt road, large water puddles on the road, ice and snow on the road, or oil spill on the road. The road surface information is preferably received from a navigation service. The road surface information may additionally or alternatively be received from one or more sensors arranged on the vehicle.

One adjustment parameter **120** is related to the optimum temperature of the tire **128.** The optimum temperature of the tire may be a fixed or dynamic value. The optimum temperature of the tire may be an adapted value dependent one or more parameters. The optimum temperature of the tire may for example be dependent on rolling resistance coefficient, inclination of the road, ambient temperature of the vehicle, weight of the vehicle or other relevant parameter. The optimum temperature may be an actual value (calculated) or an estimated value.

One adjustment parameter is related to the tear of the tire **126.** The tear of the tire may be a fixed or dynamic value. The tear of the tire may be an adapted value dependent one or more parameters. The tear of the tire may for example be dependent on the inflation of the tire (or tire pressure), the speed of the vehicle **10,** weather conditions, maintenance, weight of the vehicle and/or road conditions.

One adjustment parameter is related to the pressure of the tire **125.** The pressure of the tire may also be seen as the inflation of the tire. The pressure of the tire may be a fixed or dynamic value. The tire pressure may cause differences in steering, braking distance, fuel efficiency and tear of the tire.

One adjustment parameter is related to ambient conditions **123.** The ambient condition **123** may for example be humidity, temperature and/or precipitation. The humidity may be a current value, a historical value and/or a prediction of upcoming humidity based on weather data. The humidity may account for fog and mist and may also be referred to as moisture. The temperature may be the temperature of the road and/or the temperature surrounding the vehicle. The temperature may be a current value, a historical value and/or an estimation of upcoming temperature based on weather data. Precipitation may for example be rain, drizzle, sleet, snow, ice pellets, graupel and hail. The precipitation may be a current value, a historical value and/or an estimation of upcoming precipitation based on weather data.

One adjustment parameter may be related to time. The time may relate to the time of year, such as the month of the year or the season of the year (spring, summer, autumn, winter). The time of year may affect the precipitation, the outdoor temperature, atmospheric humidity and road salting. The time may further relate to the time of the day, such as a specific time or time range (morning, midday/noon, afternoon evening, night). The time of day may affect the precipitation, outdoor temperature and atmospheric humidity.

The processing circuitry **702** is configured to determine an axle load adjustment action **100** based on at least one adjustment parameter **120.** In one example the determination is further based on tire data **103.** In one example, the axle adjustment action **100** relates to an instruction to increase the load **130** and/or an instruction to maintain the load **140.** In one example, the instruction to increase the load **130** comprises a value of the specific increase. The axle load adjustment action **100** may comprise a temporarily increase of the load of the at least one axle **20** of the vehicle **10.**

As shown in the illustrative **FIG. 4B****,** the axle load adjustment action **100** may comprise different information. In one example, the axle load adjustment action **100** comprises a load value **133,** a time frame **134** and information pertaining to the axle or axles **135** in question. The load value **133** may be the value of the increased load. The time frame **134** is the time frame to which the increased load value is applied. The information pertaining to the axle or axles **135** relates to identify the one or more axles that will have an increase load.

The increase of the load of the at least one vehicle axle **20** may be performed by lifting and/or lowering at least a part of an axle **20** of the vehicle **10,** as soon will be described more in detail with reference to FIGS. 5A-B. The axle load adjustment action **100** causes an increase in temperature of the at least one tire **18** and thereby changing the rolling resistance of said tire **18.** This is beneficial for example during the starting process of the vehicle, such as in the beginning of a route.

As mentioned below, the determination of the axle load adjustment action **100** may be based on one or more adjustment parameters **120.** In one example the axle load adjustment action **100** is based on requirement data **110,** tire data **103** and the upcoming route **124.** In another example the axle load adjustment action **100** is based on requirement data **110,** tire data **103** and the energy consumption **129.** In one example the axle load adjustment action **100** is based on requirement data **110,** tire data **103** and the tear of the tire **126.** In yet one example the axle load adjustment action **100** is based on requirement data **110,** tire data **103** and the optimum temperature of the tire **128.**

As should be understood by the person skilled in the art, the determination of the axle load adjustment action **100** may be based on several adjustment parameters **120** in different combinations. The different parameters may be weighted in different manner. For example, the requirement data may be given a higher weight than for example the energy consumption **129.** The weights given may depend on the magnitude of the variable being monitored. It may further depend on the importance of the variable to the context of establishing an optimum axle load adjustment action. This could for example be based on engineering judgment.

In one example, the processing circuitry **702** is configured to evaluate the need of an axle load adjustment action **100.** The evaluation of the need of an axle load adjustment action **100** is preferably performed prior to the determination of the axle load adjustment action. The evaluation may be based on tire data **103.** The evaluation may further be based on one or more adjustment parameters **120.** For example, the evaluation may be based on tire data **103** and the energy consumption **129.**

FIG. 5A-B are exemplary illustrations of different parameters over time. **FIG. 5A** illustrates the tire temperature over time, as well as tire rolling resistance coefficient over time. The dotted line **30** represents a situation where no axle load adjustment action **100** to temporarily increase the load is used, whereas the solid line **32** represents a situation where an axle load adjustment action **100** to temporarily increase the load is used.

**FIG. 5B** illustrates the energy consumption over time for a vehicle using with and without using an axle load adjustment action **100.** The line **33** illustrates the predicted energy consumption if no axle load adjustment is made. The line **34** illustrates the predicted energy consumption is an axle load adjustment is made. As can be seen, over time, there is a potential energy saving when making an axle load adjustment. In time frame **A,** there is a slightly higher energy consumption when making an axle load adjustment. However, as can be seen in time frame **B,** the energy consumption will be lower once the high tire temperature has been reached when an axle load adjustment has been made.

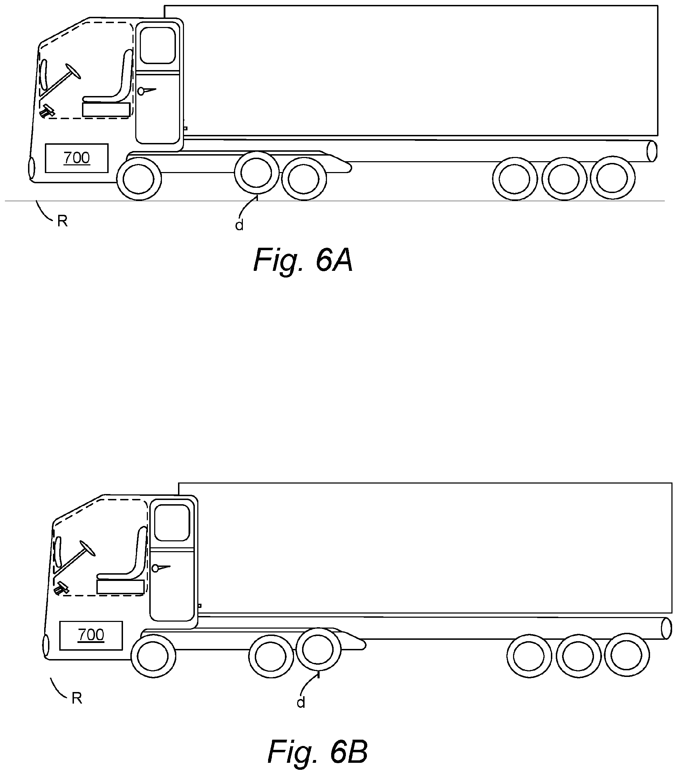

FIG. 6A -B are exemplary views of a vehicle **10** having a temporarily increase of the load of the at least one axle **20** of the vehicle **10.** In **FIG. 6A****,** the first wheel of the bogie axle is lifted in order to achieve a higher load of the second wheel of the bogie axle. In the schematic drawing the first wheel is lifted such that it is arranged with a distance **d** over the road **R.** However, the lift of the wheel could also be less so that the wheel still has contact with the road **R.** The aim of the lift/lowering is to cause a change in pressure on the tire. In **FIG. 6B****,** the second wheel of the bogie axle is lifted in order to achieve a higher load of the first wheel of the bogie axle.

The axle load adjustment action **100** could be performed on an axle **20** in push configuration or in pull configuration. In a push configuration, the axle is positioned behind the engine. The engine's power is generally transferred to the axle through a driveshaft. A push configuration refers to an axle where the wheels are mounted to the rear of the vehicle, meaning the wheels push the vehicle forward. In a pull configuration, the axle is positioned in front of the engine. The engine's power is transferred to the axle through a transmission, which routes the power to the axle and causes the vehicle's wheels to turn. A pull configuration refers to an axle where the wheels are mounted to the front of the vehicle, meaning the wheels pull the vehicle forward.

The axle load adjustment action **100** could be performed on two driving axles. In that case, the axles are alternated between the two driving axles during the drive. In one example, the axle load adjustment action is performed on a driving axle and a bogie axle.

In one example, the vehicle comprises a plurality of axles **20** wherein the axle load adjustment action **100** of a vehicle is performed in pairs of said axles. For example, the first axle of the axle pair is receiving an increased load, the second axle pair is receiving an decreased load.

In one example, the normal combined pressure on a bogie axle is 10 000 kg. During an axle load adjustment action **100,** the pressure on the first axle is reduced to 2 000 kg so that the pressure on the second axle can be increased to 8 000 kg. In this case, the first axle is lifted to a distance where the wheel is still contacting the road **R** but with a decreased pressure.

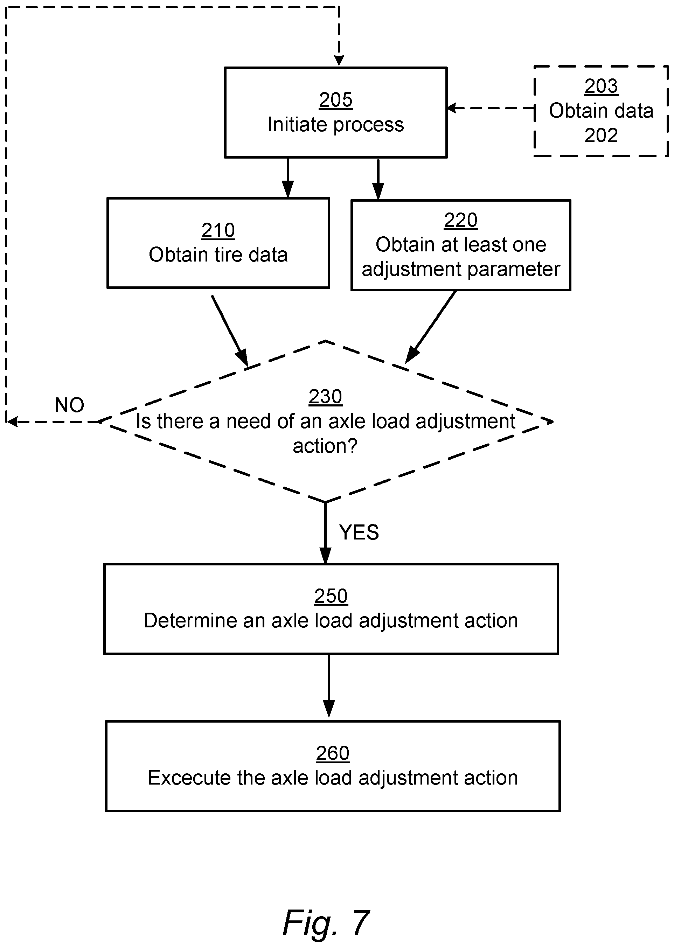

**FIG. 7** is a flowchart of a computer-implemented method **200** for performing an axle load adjustment action **100** of a vehicle axle **20** of a vehicle **10.** The method is first initiated **205.** The method may be initiated in different ways. In one example, the user of the vehicle is initiating the process. This may be done using an interface in the vehicle, for example a physical button or a virtual button on a display. The process could refer to the evaluation **230** and/or the determination **250.**

In one example, the vehicle is automatically initiating the process based on data **203.** The data **203** may be based on different events, such as starting the motor or entering a travel destination in a navigation system. The data **203** may be based on different factors such as time, for example a time period since the last initiation, a time period since the vehicle was started, a time period since the motor was started, or a specific time during the day. The data **203** may be based on parameters relating to the vehicle, road or ambient conditions. Such parameters could be tire data and/or adjustment parameters as have been described in detail herein. In other words, the data **203** may be tire data and/or adjustment parameter(s).

The method comprises obtaining **210** tire data of at least one tire of the vehicle **10.** The method further comprises obtaining **220** at least one adjustment parameter pertaining to the vehicle **10** and/or the road on which the vehicle is travelling and/or ambient conditions.

In an optional step, the method further comprises evaluating **230** the need of an axle load adjustment action **100.** The evaluation **230** may be initiated **205** as described above. The evaluation may be based on tire data. For example, if the tire temperature is sufficient there is no need to perform an axle load adjustment action. The evaluation may further be based on one or more adjustment parameters. For example, the evaluation may be based on tire data in combination with an estimated energy gain. If it is determined that there is a need of an axle load adjustment action **100,** the system will continue to determine **250** an axle load adjustment action.

If it its determined that there is no need for an axle load adjustment action, the process may be ended. In one example, the system will make a new evaluation. The new evaluation may be performed after a given time frame and/or after a given distance travelled. In one example, the system will make a new evaluation every time the vehicle starts. The new evaluation may be based on data **203.**

If it is determined that there is a need for an axle load adjustment action, the method further comprises determining an axle load adjustment action **250.**

In one example, the optional evaluation is not present. Hence, the process is initiated **205** by obtaining tire data **210** and adjustment parameters **220,** and determining an axle load adjustment action. Hence, the determination **250** may be initiated **205** as described above.

The axle load adjustment action **100** may relate to an increase load **130,** and/or to a maintained load **140.** The method further comprises executing the axle load adjustment action **100.** The execution of the action may comprise instructions to change the load of at least one axle **20** of the vehicle **10.** The change of load is temporarily. The change of load may be made for a specific time period. The time period could be a matter of minutes. In one, non-limiting example, the time period is 5 minutes. The time period may be affected by several parameters, as mentioned herein. The axle load adjustment action **100** preferably comprises information relating to the time period. The load may be changed by lifting and/or lowering at least a part of an axle **20.** The change of load changes the pressure on the tire.

One example of a method will now be discussed. The vehicle is about to take off or has just taken off, with cold tire temperatures, which means that the rolling resistance coefficient is higher than it will be when the tires have increased their temperatures and potentially reached a temperature equilibrium. The vehicle checks if an accelerated tire warming procedure should/can be performed by making rear axle load adjustments, meaning that the vehicle analyzes if the vehicle weight, the axle load requirements and the legal requirement for the road allows for the increased axle loads (temporarily). The allowed axle load requirements and the legal requirements of the road cannot be allowed to be exceeded. The legal axle load requirements for the road could for example be retrieved using telematics together with GPS/GNSS navigational data. The allowed axle load requirement data is already stored within the specific vehicle. The vehicle also evaluates if the predicted total energy savings potential of performing the procedure is positive.

If the conclusion from the evaluation is positive, the vehicle proceeds by increasing the warmup rate of the rear axle tires by temporarily increasing the load on either the drive axle and the bogie axle, by lifting and lowering the bogie axle as needed. This procedure can be done in different ways, but what is important is that the available propulsion/traction performance and the available braking performance is always kept at a sufficient level. The tire wear should also be kept as low as possible.

By increasing the load on each axle separately, the warmup rate of the tires per axle can be increased compared to if the axles would have had the load distributed equally. When the temperatures increase, the rolling resistance coefficient will also decrease, which could help to save energy and could increase tire grip performance in general.

In one example, special care is taken to minimize the tire wear when using the strategy.

In one example, the accelerated tire warming strategy is optimized using predictive data of the upcoming route, optimizing how to most energy efficiently shift the load between the axles in order to both save energy and to reduce tire wear.

In one example, other axles than the drive axles and the bogie axle are used when performing the strategy, such as for example bogie axles on a trailer.

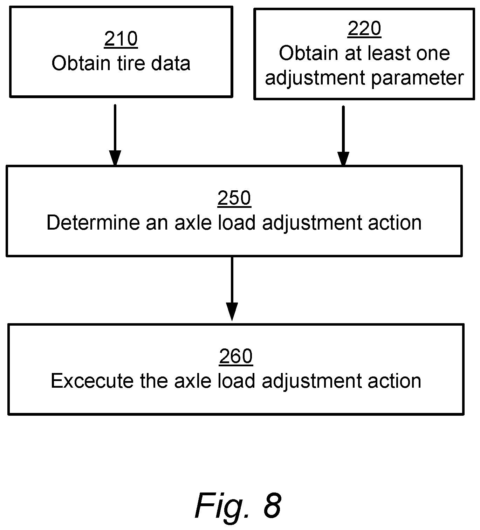

**FIG. 8** is a flow chart of a method to perform an axle load adjustment action **100** on a vehicle axle **20** of a vehicle **10** according to an example. A computer-implemented method is provided. The method comprises obtaining **210,** by processing circuitry of a computer system, tire data **103.** The tire data **103** comprises rolling resistance data **102** and/or temperature data **104** of at least one tire **18** of the vehicle **10.** The method further comprises obtaining **220,** by the processing circuitry, at least one adjustment parameter **120,** wherein at least one adjustment parameter **120** is requirement data **110** pertaining to axle load requirements of the vehicle **112,** the weight of the vehicle **114** and the legal requirement **116** for the road **R** on which the vehicle is or will be travelling. The method further comprises determining **250,** by the processing circuitry, an axle load adjustment action **100** based on at least one adjustment parameter **120** and based on tire data **103,** and executing **260,** by the processing circuitry, said axle load adjustment action **100.** The axle load adjustment action 100 comprises a temporarily increase of the load of the at least one axle **20** of the vehicle **10.**

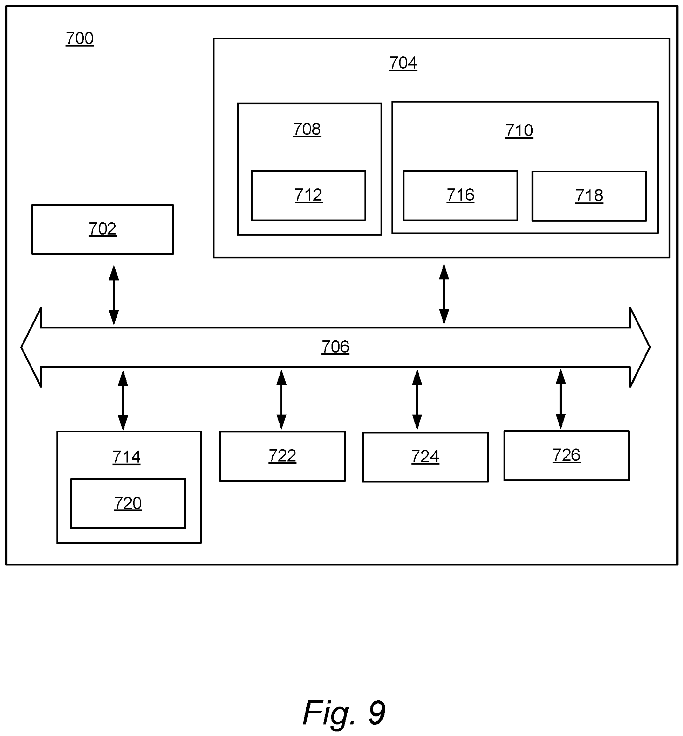

**FIG. 9** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702**(e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702**may include any number of hardware components for conducting data or signal processing or for executing computer code stored in memory **704.** The processing circuitry **702**may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702**may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702**(e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702**to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702**may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702**through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (**700**) for performing an axle load adjustment action (**100**) of at least one vehicle axle (**20**) of a vehicle (**10**), the computer system (**700**) comprising processing circuitry (**702**) configured to: obtain (**210**) tire data (**103**), wherein said tire data (**103**) comprises rolling resistance data (**102**) and/or temperature data (**104**) of at least one tire (**18**) of the vehicle (**10**); obtain (**220**) at least one adjustment parameter (**120**), wherein at least one adjustment parameter (**120**) is requirement data (**110**) pertaining to the weight of the vehicle (**114**), axle load requirements of the vehicle (**112**), and the legal requirements (**116**) for the road (**R**) on which the vehicle is or will be travelling, determine (**250**) an axle load adjustment action (**100**) based on at least one adjustment parameter (**120**) and based on tire data (**103**); and execute (**260**) said axle load adjustment action (**100**), wherein the axle load adjustment action (**100**) comprises an temporarily increase of the load of the at least one axle (**20**) of the vehicle (**10**).

Example 2: The computer system of example 1, wherein the increase of the load of the at least one vehicle axle (**20**) is performed by lifting and/or lowering at least a part of an axle (**20**) of the vehicle (**10**).

Example 3: The computer system of example 1 or 2, wherein the axle load adjustment action (**100**) causes an increase in temperature of the at least one tire (**18**) and thereby changing the rolling resistance of said tire (**18**).

Example 4: The computer system of any of examples 1-3, wherein the processing circuitry is further configured to: evaluate (**230**) the need of an axle load adjustment action (**100**) based on the tire data (**103**), and upon determining that there is a need for an axle load adjustment action (**100**) perform said determination (**250**).

Example 5: The computer system of example 4, wherein the evaluation (**230**) is based on tire data (**103**) and/or one or more adjustment parameters (**120**).

Example 6: The computer system of example 4 or 5, wherein the processing circuitry is further configured to initiate (**205**) the evaluation (**230**), wherein the initiation is automatically performed based on data (**202**), wherein said data pertains to information relating to the initiation of the vehicle (**10**).

Example 7: The computer system of any of examples 1 - 6, wherein the determination of the axle load adjustment action (**100**) is based on at least two adjustment parameters (**120**), and wherein one adjustment parameter (**120**) is a predicted estimative data of energy consumption (**129**) of an adjusted axle load, predicted estimative data of energy consumption (**129**) of a maintained axle load and/or the difference between the predicted data of the energy consumption of a maintained axle load and the predicted data of the energy consumption of an adjusted axle load.

Example 8: The computer system of any of examples 1 - 7, wherein the determination of the axle load adjustment action (**100**) is based on at least two adjustment parameters (**120**), wherein one adjustment parameter (**120**) is predictive data of the upcoming route (**124**) of the vehicle (**10**).

Example 9: The computer system of any of examples 1 - 8, wherein the determination of the axle load adjustment action (**100**) is based on at least two adjustment parameters (**120**), wherein one adjustment parameter (**120**) is estimated tire wear (**126**) of at least one tire of the vehicle (**10**), the tire pressure (**125**) and/or an optimum temperature (**128**) of the at least one tire.

Example 10: The computer system of any of examples 1 - 9, wherein the at least one vehicle axle (**20**) is a driving axle or a bogie axle.

Example 11: The computer system of example 10, wherein the at least one vehicle axle (**20**) in a push configuration or in a pull configuration.

Example 12: The computer system of any of examples 1 - 11, wherein the processing circuitry is further configured to obtain the legal requirements for the road (**R**) from navigational data.

Example 13: The computer system of any of examples 1 - 12, wherein one adjustment parameter (**120**) is related to ambient conditions of the vehicle.

Example 14: The computer system of any of examples 1 - 13, wherein the axle load adjustment action (**100**) comprises a load value and a time period.

Example 15: The computer system of example 6, wherein information relating to the initiation of the vehicle (**10**) comprises starting the motor.

Example 16: A vehicle comprising the computer system of any of examples 1-10, and at least one axle (**20**

Example 17: A computer-implemented method for performing an axle load adjustment action (**100**) of at least one vehicle axle (**20**) of a vehicle (**10**), comprising: obtaining (**210**), by processing circuitry of a computer system, tire data (**103**), wherein said tire data (**103**) comprises rolling resistance data (**102**) and/or temperature data (**104**) of at least one tire (**18**) of the vehicle (**10**); obtaining (**220**), by the processing circuitry, at least one adjustment parameter (**120**), wherein at least one adjustment parameter (**120**) is requirement data (**110**) pertaining to axle load requirements of the vehicle (**112**), the weight of the vehicle (**114**) and the legal requirements (**116**) for the road (**R**) on which the vehicle is or will be travelling; determining (**250**), by the processing circuitry, an axle load adjustment action (**100**) based on at least one adjustment parameter (**120**) and based on tire data (**103**); and executing (**260**), by the processing circuitry, said axle load adjustment action (**100**), wherein the axle load adjustment action (**100**) comprises an temporarily increase of the load of the at least one axle (**20**) of the vehicle (**10**).

Example 18: The method of example 17, wherein the determination of the axle load adjustment action (**100**) is based on at least two adjustment parameters (**120**), wherein the method further comprises: obtaining at least one additional adjustment parameter, wherein the additional adjustment parameter is predicted estimative data of energy consumption (**129**) of an adjusted axle load, predicted estimative data of energy consumption (**129**) of a maintained axle load, the difference between the predicted data of the energy consumption of a maintained axle load and the predicted data of the energy consumption of an adjusted axle load, predictive data of the upcoming route (**124**) of the vehicle (**10**), tire pressure (**125**), estimated tire wear (**126**) of at least one tire of the vehicle (**10**) and/or an optimum temperature (**128**) of the at least one tire.

Example 19: A computer program product comprising program code for performing, when executed by the processing circuitry, the method of any of examples 17-18.

Example 20: A non-transitory computer-readable storage medium comprising instructions, which when executed by the processing circuitry, cause the processing circuitry to perform the method of any of examples 17 - 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (**700**) for performing an axle load adjustment action (**100**) of at least one vehicle axle (**20**) of a vehicle (**10**), the computer system (**700**) comprising processing circuitry (**702**) configured to:
obtain (**210**) tire data (**103**), wherein said tire data (**103**) comprises rolling resistance data (**102**) and/or temperature data (**104**) of at least one tire (**18**) of the vehicle (**10**);
obtain (**220**) at least one adjustment parameter (**120**), wherein at least one adjustment parameter (**120**) is requirement data (**110**) pertaining to the weight of the vehicle (**114**), axle load requirements of the vehicle (**112**), and the legal requirements (**116**) for the road (**R**) on which the vehicle is or will be travelling,
determine (**250**) an axle load adjustment action (**100**) based on at least one adjustment parameter (**120**) and based on tire data (**103**); and
execute (**260**) said axle load adjustment action (**100**), wherein the axle load adjustment action (**100**) comprises an temporarily increase of the load of the at least one axle (**20**) of the vehicle (**10**).

2. The computer system of claim 1, wherein the increase of the load of the at least one vehicle axle (**20**) is performed by lifting and/or lowering at least a part of an axle (**20**) of the vehicle (**10**).

3. The computer system of claim 1 or 2, wherein the axle load adjustment action (**100**) causes an increase in temperature of the at least one tire (**18**) and thereby changing the rolling resistance of said tire (**18**).

4. The computer system of any of claims 1 - 3, wherein the processing circuitry is further configured to:
evaluate (**230**) the need of an axle load adjustment action (**100**) based on the tire data (**103**), and upon determining that there is a need for an axle load adjustment action (**100**) perform said determination (**250**).

5. The computer system of claim 4, wherein the evaluation (**230**) is based on tire data (**103**) and/or one or more adjustment parameters (**120**).

6. The computer system of claim 4 or 5, wherein the processing circuitry is further configured to:
initiate (**205**) the evaluation (**230**), wherein the initiation is automatically performed based on data (**202**), wherein said data pertains to information relating to the initiation of the vehicle (**10**).

7. The computer system of any of claims 1 - 6, wherein the determination of the axle load adjustment action (**100**) is based on at least two adjustment parameters (**120**), and wherein one adjustment parameter (**120**) is a predicted estimative data of energy consumption (**129**) of an adjusted axle load, predicted estimative data of energy consumption (**129**) of a maintained axle load and/or the difference between the predicted data of the energy consumption of a maintained axle load and the predicted data of the energy consumption of an adjusted axle load.

8. The computer system of any of claims 1-7, wherein the determination of the axle load adjustment action (**100**) is based on at least two adjustment parameters (**120**), wherein one adjustment parameter (**120**) is predictive data of the upcoming route (**124**) of the vehicle (**10**).

9. The computer system of any of claims 1 - 8, wherein the determination of the axle load adjustment action (**100**) is based on at least two adjustment parameters (**120**), wherein one adjustment parameter (**120**) is estimated tire wear (**126**) of at least one tire of the vehicle (**10**), the tire pressure (**125**) and/or an optimum temperature (**128**) of the at least one tire.

10. The computer system of any of claims 1-9, wherein the at least one vehicle axle (**20**) is in a push configuration or in a pull configuration.

11. A vehicle comprising the computer system of any of claims 1-10, and at least one axle (**20**).

12. A computer-implemented method for performing an axle load adjustment action (**100**) of at least one vehicle axle (**20**) of a vehicle (**10**), comprising:
obtaining (**210**), by processing circuitry of a computer system, tire data (**103**), wherein said tire data (**103**) comprises rolling resistance data (**102**) and/or temperature data (**104**) of at least one tire (**18**) of the vehicle (**10**);
obtaining (**220**), by the processing circuitry, at least one adjustment parameter (**120**), wherein at least one adjustment parameter (**120**) is requirement data (**110**) pertaining to axle load requirements of the vehicle (**112**), the weight of the vehicle (**114**) and the legal requirements (**116**) for the road (**R**) on which the vehicle is or will be travelling;
determining (**250**), by the processing circuitry, an axle load adjustment action (**100**) based on at least one adjustment parameter (**120**) and based on tire data (**103**); and
executing (**260**), by the processing circuitry, said axle load adjustment action (**100**), wherein the axle load adjustment action (**100**) comprises an temporarily increase of the load of the at least one axle (**20**) of the vehicle (**10**).

13. The method of claim 12, wherein the determination of the axle load adjustment action (**100**) is based on at least two adjustment parameters (**120**), wherein the method further comprises:
obtaining at least one additional adjustment parameter, wherein the additional adjustment parameter is predicted estimative data of energy consumption (**129**) of an adjusted axle load, predicted estimative data of energy consumption (**129**) of a maintained axle load, the difference between the predicted data of the energy consumption of a maintained axle load and the predicted data of the energy consumption of an adjusted axle load, predictive data of the upcoming route (**124**) of the vehicle (**10**), tire pressure (**125**), estimated tire wear (**126**) of at least one tire of the vehicle (**10**) and/or an optimum temperature (**128**) of the at least one tire.

14. A computer program product comprising program code for performing, when executed by the processing circuitry, the method of any of claims 12- 13.

15. A non-transitory computer-readable storage medium comprising instructions, which when executed by the processing circuitry, cause the processing circuitry to perform the method of any of claims 12 - 13.

## Amended claims

### Amended claims in accordance with Rule 137(2) EPC.

1. A computer system (**700**) for performing an axle load adjustment action (**100**) of at least one vehicle axle (**20**) of a vehicle (**10**), the computer system (**700**) comprising processing circuitry (**702**) configured to:
obtain (**210**) tire data (**103**), wherein said tire data (**103**) comprises temperature data (**104**) of at least one tire (**18**) of the vehicle (**10**);
obtain (**220**) at least a first adjustment parameter and a second adjustment parameter(**120**), wherein said first adjustment parameter (**120**) is requirement data (**110**) pertaining to the weight of the vehicle (**114**), axle load requirements of the vehicle (**112**), and the legal requirements (**116**) for the road (**R**) on which the vehicle is or will be travelling, and wherein said second adjustment parameter (**120**) is a predicted estimative data of energy consumption (129) of an adjusted axle load, predicted estimative data of energy consumption (129) of a maintained axle load and/or the difference between the predicted data of the energy consumption of a maintained axle load and the predicted data of the energy consumption of an adjusted axle load,
determine (**250**) an axle load adjustment action (**100**) based on said at least two adjustment parameters (**120**) and on said tire data (**103**); and
execute (**260**) said axle load adjustment action (**100**), wherein the axle load adjustment action (**100**) comprises an temporarily increase of the load of the at least one axle (**20**) of the vehicle (**10**) by lifting and/or lowering at least a part of an axle (**20**) of the vehicle (**10**),
wherein the axle load adjustment action (**100**) causes an increase in temperature of the at least one tire (**18**) and thereby changing the rolling resistance of said tire (**18**)**.**

2. The computer system of claim 1, wherein the processing circuitry is further configured to:
evaluate (**230**) the need of an axle load adjustment action (**100**) based on the tire data (**103**), and upon evaluating that there is a need for an axle load adjustment action (**100**) perform said determination (**250**).

3. The computer system of claim 2, wherein the evaluation (**230**) is based on said tire data (**103**) and said one or more adjustment parameters (**120**).

4. The computer system of claim 2 or 3, wherein the processing circuitry is further configured to:
initiate (**205**) the evaluation (**230**), wherein the initiation is automatically performed based on data (**202**), wherein said data pertains to information relating to the initiation of the vehicle (**10**).

5. The computer system of any of claims 1 - 4, wherein the determination of the axle load adjustment action (**100**) is based on at least two adjustment parameters (**120**), wherein one adjustment parameter (**120**) is predictive data of the upcoming route (**124**) of the vehicle (**10**).

6. The computer system of any of claims 1 - 5, wherein the determination of the axle load adjustment action (**100**) is based on at least two adjustment parameters (**120**), wherein one adjustment parameter (**120**) is estimated tire wear (**126**) of at least one tire of the vehicle (**10**), the tire pressure (**125**) and/or an optimum temperature (**128**) of the at least one tire.

7. The computer system of any of claims 1 - 6, wherein the at least one vehicle axle (**20**) is in a push configuration where the axle (20) is positioned behind an engine of the vehicle or in a pull configuration where the axle (20) is positioned in front of said engine.

8. A vehicle comprising the computer system of any of claims 1-7, and at least one axle (**20**).

9. A computer-implemented method for performing an axle load adjustment action (**100**) of at least one vehicle axle (**20**) of a vehicle (**10**), comprising:
obtaining (**210**), by processing circuitry of a computer system, tire data (**103**), wherein said tire data (**103**) comprises temperature data (**104**) of at least one tire (**18**) of the vehicle (**10**);
obtaining (**220**), by the processing circuitry, at least a first adjustment parameter (**120**) and a second adjustment parameter (**120**), wherein said first adjustment parameter (**120**) is requirement data (**110**) pertaining to axle load requirements of the vehicle (**112**), the weight of the vehicle (**114**) and the legal requirements (**116**) for the road (**R**) on which the vehicle is or will be travelling, and wherein said second adjustment parameter (**120**) is a predicted estimative data of energy consumption (129) of an adjusted axle load, predicted estimative data of energy consumption (129) of a maintained axle load and/or the difference between the predicted data of the energy consumption of a maintained axle load and the predicted data of the energy consumption of an adjusted axle load;
determining (**250**), by the processing circuitry, an axle load adjustment action (**100**) based on said at least two adjustment parameters (**120**) and on said tire data (**103**); and
executing (**260**), by the processing circuitry, said axle load adjustment action (**100**), wherein the axle load adjustment action (**100**) comprises an temporarily increase of the load of the at least one axle (**20**) of the vehicle (**10**) by lifting and/or lowering at least a part of an axle (**20**) of the vehicle (**10**),
wherein the axle load adjustment action (**100**) causes an increase in temperature of the at least one tire (**18**) and thereby changing the rolling resistance of said tire (**18**).

10. The method of claim 9, wherein the determination of the axle load adjustment action (**100**) is based on at least two adjustment parameters (**120**), wherein the method further comprises:
obtaining at least one additional adjustment parameter, wherein the additional adjustment parameter is predictive data of the upcoming route (**124**) of the vehicle (**10**), tire pressure (**125**), estimated tire wear (**126**) of at least one tire of the vehicle (**10**) and/or an optimum temperature (**128**) of the at least one tire.

11. A computer program product comprising instructions to cause the vehicle of claim 8 to execute, by the processing circuitry of said vehicle, the steps of the method of any of claims 9- 10.

12. A non-transitory computer-readable storage medium having stored thereon the computer program of claim 11.
